(19) Europäisches Patentamt
European Patent Office
Office européen des brevets

(11) **EP 2 410 289 A1**

(12) **EUROPEAN PATENT APPLICATION**
published in accordance with Art. 153(4) EPC

(43) Date of publication:
25.01.2012 Bulletin 2012/04

(51) Int Cl.:
*G01B 11/24* (2006.01)　　*G01B 9/02* (2006.01)

(21) Application number: **10753255.8**

(22) Date of filing: **09.03.2010**

(86) International application number:
**PCT/JP2010/001643**

(87) International publication number:
**WO 2010/106758 (23.09.2010 Gazette 2010/38)**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **19.03.2009 JP 2009067183**

(71) Applicant: **Panasonic Corporation**
**Kadoma-shi**
**Osaka 571-8501 (JP)**

(72) Inventors:
• **HAMANO, Seiji**
**Chuo-ku, Osaka 540-6207 (JP)**

• **OOTA, Sadafumi**
**Chuo-ku, Osaka 540-6207 (JP)**
• **SUGATA, Fumio**
**Chuo-ku, Osaka 540-6207 (JP)**
• **KIKUCHI, Yoshihiro**
**Chuo-ku, Osaka 540-6207 (JP)**

(74) Representative: **Unland, Jochen Hermann**
**Eisenführ, Speiser & Partner**
**P.O. Box 10 60 78**
**28060 Bremen (DE)**

(54) **SHAPE MEASUREMENT DEVICE AND METHOD**

(57)　　Light emitted from a light source (90) is formed into parallel light beams, the parallel light beams are divided into two light beams, and one of the divided light beams is converted by a conical lens (104) to light (beam) having an energy density on an optical axis maximized over a distance, and is applied to a surface of a measuring object (105), with another one of the divided light beams being applied to a reference mirror (107), so that, by detecting an interfered light beam between rearward scattered light of the light (beam) applied to the surface of the measuring object and reflected light from the reference mirror, a shape of the measuring object is measured.

*Fig. 1*

EP 2 410 289 A1

**Description**

TECHNICAL FIELD

The present invention relates to a shape measuring apparatus and a method thereof, which can measure a measuring object, such as an industrial product, with a longer depth of focus, for example, a depth of focus longer by one digit or two digits than that of a conventional apparatus, and a higher resolution, for example, a resolution of sub-micron or less, in comparison with the conventional apparatus.

BACKGROUND ART

Conventionally, in a method for measuring a shape by detecting interfered light, an apparatus designed based on the Michelson interference has been proposed. This apparatus has a structure in which light emitted from a light source is made into parallel light beams, and the parallel light beams are divided into two light beams by a beam splitter. Thus, one of the divided light beams is applied to a measuring object through an objective lens, while the other light beam being applied to a reference mirror provided with a moving mechanism, so that a rearward scattered light beam from the measuring object and a reflected light beam from the reference mirror are allowed to form an image on a light detector placed on a focused surface through an image forming lens. The rearward scattered light beam from the measuring object and the reflected light beam from the reference mirror are derived from the same light source and are interferable, so that, when the optical path difference is relatively changed by moving the reference mirror provided with the moving mechanism, an interference signal is obtained from the light detector and the shape of the measuring object can be measured based on the interference signal (for example, see Patent Document 1).

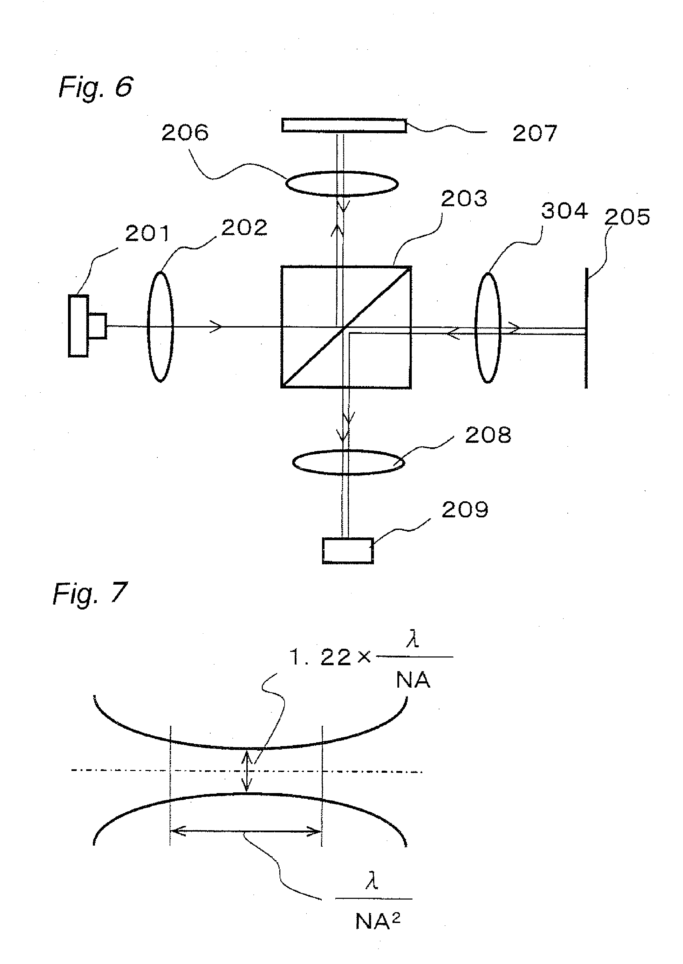

Fig. 6 shows the conventional structure.
In Fig. 6, reference numeral 201 represents a light emitting device that emits light, and reference numeral 202 represents a collimator lens that forms light emitted from the light emitting device 201 into parallel light beams. Moreover, reference numeral 203 represents a beam splitter used for dividing the parallel light beams from the collimator lens 202 so as to be directed to the measuring object and to the reference mirror. Reference numeral 304 represents an objective lens used for applying one of the parallel light beams divided by the beam splitter 203 to a measuring object 205. Reference numerals 206 and 207 respectively represent a lens that condenses the other one of the parallel light beams divided by the beam splitter 203, and a reference-use reflective mirror. Reference numerals 208 and 209 respectively represent a lens that condenses an interfered light derived from two light beams, namely, the reflected light or scattered light from the measuring object 205 and light from the reference-use reflective mirror 207, and a detector serving as a detecting device.
Conventionally, in the Michelson interference, one or a plurality of lenses having a spherical surface or a non-spherical surface have been used as the objective lens 304. As shown in Fig. 7, light from the objective lens 304 has a depth of focus $\lambda/NA^2$ that is optically determined by a numerical aperture NA of the objective lens 304 and a wavelength $\lambda$ of light emitted from the light emitting device, and a light diameter $1.22 \times \lambda/NA$. Therefore, as the distance from the focus position of the objective lens 304 increases, the light diameter becomes larger to cause degradation of the resolution of the measuring apparatus. For example, in a case where an HeNe laser having a light (beam) wavelength $\lambda = 633$ nm is used as the light source and a lens having a numerical aperture NA = 0.1 is used as the objective lens 304, the depth of focus is set to 63 $\mu$m, and the light (beam) diameter is set to 7.7 $\mu$m.

PRIOR ART DOCUMENTS

PATENT DOCUMENT

Patent Document 1: Japanese Unexamined Patent Publication No. 6-341809

SUMMARY OF THE INVENTION

ISSUE TO BE SOLVED BY THE INVENTION

However, in the conventional apparatus based on the Michelson interference, one or a plurality of lenses having a spherical surface or a non-spherical surface are used as the objective lens 304, and the measurement depth and the measurement resolution are determined by the numerical aperture NA of the objective lens 304. More specifically, in order to make the measurement depth longer, the numerical aperture NA of the objective lens 304 needs to be made smaller. However, when the numerical aperture NA is made smaller, the measurement resolution deteriorates. In contrast, in order to make the measurement resolution higher, the numerical aperture NA of the objective lens 304 needs to be made larger. However, when the numerical aperture NA is made larger, the measurement depth becomes shorter. In this manner, in the case where one or a plurality of lenses having a spherical surface or a non-spherical surface are used as the objective lens 304, the long measurement depth and the high measurement resolution have a mutually conflicting relationship in the apparatus based on the Michelson interference, thereby failing to satisfy both of the features.

Therefore, the present invention, which has been revised to solve the above-mentioned issue, has an object to provide a shape measuring apparatus and a method thereof, which can satisfy both of a long measurement depth and a high measurement resolution.

MEANS FOR SOLVING THE ISSUE

In order to achieve the above-mentioned object, the present invention has the following structures.

According to a first aspect of the present invention, there is provided a shape measuring apparatus comprising:

a light source that emits parallel light beams;
a beam splitter that divides the parallel light beams emitted from the light source into two light beams;
a conical lens that allows one of the two light beams divided by the beam splitter to pass therethrough, converts the transmitted light beam in to a light beam having an energy density on an optical axis maximized over a distance ρ satisfying an equation below so as to allow the converted light beam to be applied to a surface of a measuring object, and allows reflected light from the surface of the measuring object or rearward scattered light therefrom to pass therethrough;
a reference mirror that reflects another one of the two light beams divided by the beam splitter;
a detector that detects an interfered light beam between the reflected light applied to the surface of the measuring object and having transmitted through the conical lens or the rearward scattered light therefrom and the reflected light from the reference mirror; and
a shape measuring unit that measures a shape of the surface of the measuring object based on the interfered light detected by the detector:

$$\rho < D/\{2\tan(\beta)\},$$

where $\beta/2 = \sin^{-1}\{n\sin(\pi/2 - \alpha/2)\} - \pi/2 + \alpha/2$ is satisfied, in which
D: an effective diameter of the conical lens,
α: an apex angle of a cone shape of the conical lens,
ρ: a distance from the apex of the conical lens to the measuring object along the optical axis of the light, and
n: a refractive index of the conical lens.

According to a second aspect of the present invention, there is provided the shape measuring apparatus according to the first aspect, further comprising:

an optical filter that is placed between the beam splitter and the conical lens so as to shield an area corresponding to a top portion of the conical lens.

According to a third aspect of the present invention, there is provided the shape measuring apparatus according to the first aspect further comprising:

a plurality of shutters, each placed between the beam splitter and the conical lens and provided with a shielding portion and a doughnut-shaped transmitting portion disposed on an outer circumference of the shielding portion, wherein
the shielding portion of each of the shutters shields an area corresponding to a top portion of the conical lens,
the shielding portions of the shutters are disposed on positions different from one another, and
the shape measuring unit selectively applies the light from the conical lens to each of surfaces of a plurality of measuring objects, to carry out the shape measuring operation by selectively using the plurality of shutters.

According to a fourth aspect of the present invention, there is provided the shape measuring apparatus according to any one of the first to third aspects further comprising:

a measuring object moving device that moves the measuring object in a direction orthogonal to the optical axis direction of the light incident to the measuring object from the conical lens so as to measure the shape of the surface of the measuring object.

According to a fifth aspect of the present invention, there is provided a shape measuring method comprising:

dividing parallel light beams emitted from a light source into two light beams;
allowing a conical lens to convert one of the two divided light beams in to a light beam having an energy density on an optical axis maximized over a distance $\rho$ satisfying an equation below so as to allow the converted light beam to be applied to a surface of a measuring object;
allowing another one of the two divided light beams to be reflected by a reference mirror;
detecting an interfered light beam between reflected light reflected by the surface of the measuring object and transmitted through the conical lens or rearward scattered light therefrom and reflected light from the reference mirror; and
based on the interfered light being detected, measuring a shape of the surface of the measuring object:

$$\rho < D/\{2\tan(\beta)\},$$

where $\beta/2 = \sin^{-1}\{n\sin(\pi/2 - \alpha/2)\} - \pi/2 + \alpha/2$ is satisfied, in which
D: an effective diameter of the conical lens,
$\alpha$: an apex angle of a cone shape of the conical lens,
$\rho$: a distance from the apex of the conical lens to the measuring object along the optical axis of the light, and
n: a refractive index of the conical lens.

According to a sixth aspect of the present invention, there is provided the shape measuring method according to the fifth aspect, further comprising:

when the one of the two light beams divided by the beam splitter passes through the conical lens, measuring a shape of a first surface of the measuring object based on a first reflected light from the first surface of the measuring object derived from the one of the light beams that has been transmitted through a doughnut-shaped transmitting portion disposed on an outer circumference of an area corresponding to a top portion of the conical lens of a shutter placed between the beam splitter and the conical lens, and then
when the one of the two light beams divided by the beam splitter passes through the conical lens, measuring a shape of a second surface different from the first surface of the measuring object, based on a second reflected light reflected by the second surface of the measuring object, the second reflected light derived from the one of the light beams having been transmitted through a doughnut-shaped transmitting portion of another shutter, which has a transmitting portion at a position different from that of the shutter, placed between the beam splitter and the conical lens, the transmitting portion being placed on an outer circumference of an area corresponding to the top portion of the conical lens.

According to a seventh aspect of the present invention, there is provided the shape measuring method according to the fifth or sixth aspect, wherein, the shape of the surface of the measuring object is measured by moving the measuring object with use of a measuring object moving device in a direction orthogonal to the optical axis of the light incident to the measuring object from the conical lens.

EFFECTS OF THE INVENTION

According to the present invention, it is possible to carry out a shape measuring operation with a longer depth (for example, a depth of focus longer by one digit or two digits than that of the conventional art) and a higher resolution (for example, a resolution of sub-micron or less) in comparison with the conventional art.

BRIEF DESCRIPTION OF DRAWINGS

These and other aspects and features of the present invention will become clear from the following description taken in conjunction with the preferred embodiments thereof with reference to the accompanying drawings, in which:

Fig. 1 is a view that shows a basic structure of a shape measuring apparatus according to a first embodiment of the present invention;

Fig. 2 is a view that explains the operation of a conical lens of the shape measuring apparatus according to the first embodiment;

Fig. 3 is a graph in which a distance ρ and an optical energy density I is compared between the conical lens of the first embodiment of the present invention and a conventional objective lens;

Fig. 4A is a cross-sectional view that explains the operation of an optical filter of a shape measuring apparatus according to a second embodiment of the present invention;

Fig. 4B is a plan view of the optical filter of the shape measuring apparatus according to the second embodiment of the present invention;

Fig. 5A is a view that shows a specific structural example of the shape measuring apparatus according to the first embodiment;

Fig. 5B is an explanatory view that shows a case where shapes of front and rear surfaces of a plurality of lenses are inspected by using the shape measuring apparatus according to the first embodiment;

Fig. 5C is an explanatory view that shows part of a structure of a shape measuring apparatus according to a third embodiment of the present invention;

Fig. 5D is an explanatory view that shows part of the structure of the shape measuring apparatus according to the third embodiment;

Fig. 5E is an explanatory view that shows part of the structure of the shape measuring apparatus according to the third embodiment;

Fig. 5F is an explanatory view that shows part of the structure of the shape measuring apparatus according to the third embodiment;

Fig. 5G is an explanatory view that shows part of the structure of the shape measuring apparatus according to the third embodiment;

Fig. 5H is a flow chart that shows processes of the shape measuring operation to be carried out by using the shape measuring apparatus according to the third embodiment;

Fig. 5I is an explanatory view that shows a lens to be inspected in the shape measuring operation to be carried out by using the shape measuring apparatus according to the third embodiment;

Fig. 6 is a view that shows a structure of a conventional shape measuring apparatus; and

Fig. 7 is a view that explains issues of the conventional shape measuring apparatus.

DESCRIPTION OF EMBODIMENTS

With reference to the drawings, the following description will discuss embodiments of the present invention.

(First Embodiment)

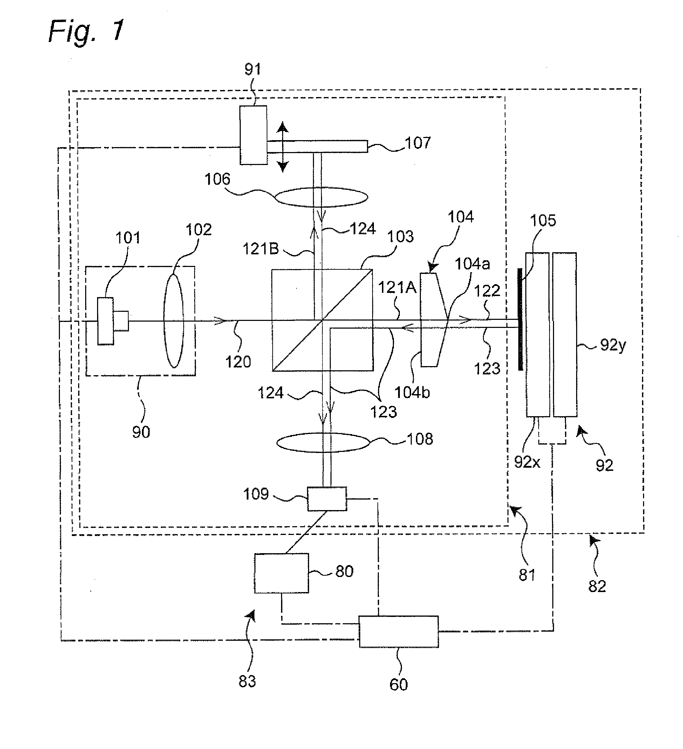

Fig. 1 shows a basic structure of a shape measuring apparatus 83 according to the first embodiment of the present invention.

In Fig. 1, reference numeral 101 represents a light emitting device that emits light, and reference numeral 102 represents a collimator lens that forms light emitted from the light emitting device 101 into parallel light beams 120. The light emitting device 101 and the collimator lens 102 configure a parallel light source 90. Moreover, reference numeral 103 represents a beam splitter used for dividing the parallel light beams 120 from the collimator lens 102 into two so as to be directed to a measuring object and to a reference mirror. Reference numeral 104 represents a conical lens that has an emitting portion (close to the measuring object 105), opposed to a measuring object 105, formed into a conical shape, and is used for applying to the measuring object 105 a first parallel light beam 121A as one of the parallel light beams divided to be directed to the measuring object by the beam splitter 103. That is, the conical lens 104 mentioned here refers to a lens having a conical shape at least in the emitting portion. The incident portion (close to the beam splitter 103) of the first parallel light beam 121A of the conical lens 104 may be formed to have a plane or curved surface.

Reference numeral 106 represents a lens used for condensing a second parallel light beam 121B as the other one of the parallel light beams divided by the beam splitter 103, and reference numeral 107 represents a reference-use reflective mirror that reflects the second parallel light beam 121B. The reference-use reflective mirror 107 is allowed to advance and retreat in the light axis direction of the second parallel light beam 121B by a reflective mirror moving device 91 that serves as one example of a reference plane driving unit. The reference-use reflective mirror 107, which serves as a reference plane, can be driven to move upward and downward in Fig. 1 by the reflective mirror moving device 91 so as to adjust the degree of interference of light received by a light receiving unit 109. Reference numeral 108 represents a lens used for condensing interfered light beams of two light beams 123 and 124, namely, reflected light or scattered light 123 from the measuring object 105 such as an industrial product, and reflected light 124 from the reference-use reflective mirror 107. Reference numeral 109 represents a detector (for example, a photo detector) that serves as a device for detecting interfered light being condensed.

A shape inspecting device 82 is configured by the above-mentioned components except for the measuring object 105. A portion of the shape inspecting device 82 exclusive of a movable stage configures a shape inspecting unit 81. This shape inspecting unit 81 is allowed to move relatively to the measuring object 105 so that a surface to be measured of the measuring object 105 can be inspected.

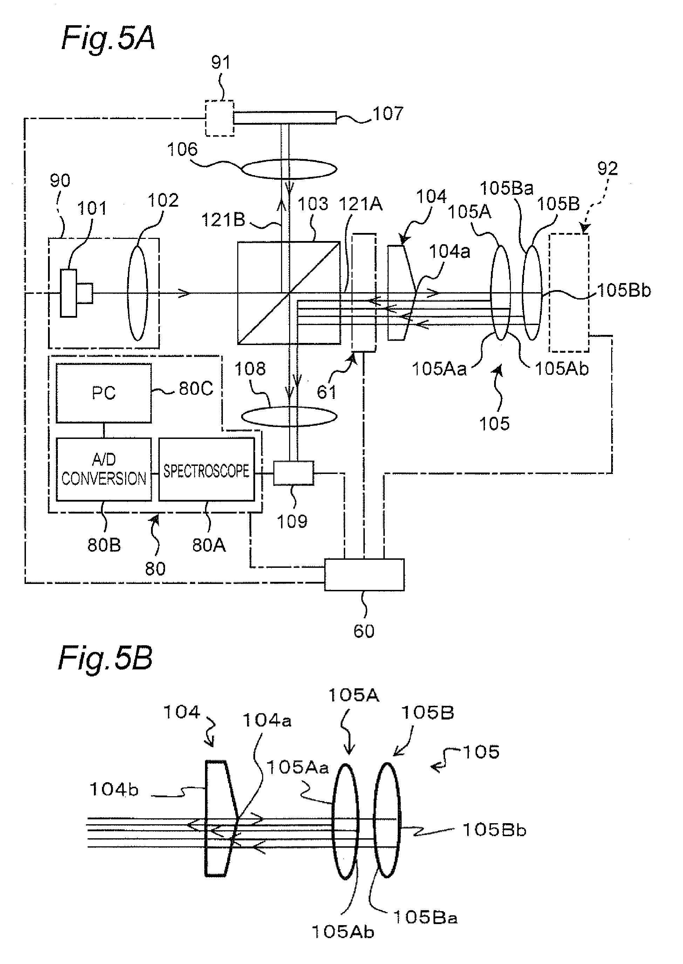

Moreover, a shape measuring unit 80, which measures the shape of the surface of the measuring object 105 based on interfered light detected by the detector 109, is disposed and connected to the detector 109 so as to configure the shape measuring apparatus 83 in totally. The shape measuring unit 80 may be configured by known soft ware or the like, which is capable of measuring the shape of a surface of the measuring object 105 based on the interfered light detected by the detector 109. The shape measuring unit 80 as one example is configured by a spectroscope 80A, an A/D converter 80B, and a personal computer 80C, as shown in Fig. 5A, and allows the interfered light detected by the detector 109 to be divided by the spectroscope 80A so as to extract only the light required. Analog information, which is contained in the light extracted by the spectroscope 80A, is converted to digital information by the A/D converter 80B, so that shape information may be then acquired by known software or the like installed in the personal computer 80C.

The light emitting device 101, the collimator lens 102, the beam splitter 103, the conical lens 104, and the measuring object 105 are disposed on a same optical axis. The lens 106 and the reference-use reflective mirror 107 are disposed on a same axis with respect to the lens 108 and the detector 109, while the beam splitter 103 being sandwiched therebetween, along a direction orthogonal to the optical axis of the light emitting device 101.

As an example of the light emitting device 101, an HeNe laser, a semiconductor laser, or the like may be used. The measuring object 105 is designed to be respectively shifted in X and Y directions, by a movable stage 92 serving as one example of the measuring object shifting device configured by an X-axis stage 92x on which the measuring object 105 is held and a Y-axis stage 92y that movably supports the X-axis stage 92x. The X-axis stage 92x is a mechanism used for driving the measuring object 105 in the X-axis direction (the direction penetrating the drawing sheet in Fig. 1). The Y-axis stage 92y is a mechanism used for driving the measuring object 105 in the Y-axis direction (the vertical direction in Fig. 1) orthogonal to the X-axis direction. In the shape inspecting device 82 of the shape measuring apparatus 83 according to the first embodiment, the entire surface to be measured of the measuring object 105 can be inspected by moving the measuring object 105 mounted on a mounting portion (not shown) of the X-axis stage 92x, relatively to the shape inspecting unit 81, by using the X-axis stage 92x and the Y-axis stage 92y.

In Fig. 1A, for easier understanding, a forward optical path and a backward optical path of light proceeding along the optical axis are indicated while being slightly deviated from each other.

The following description will discuss in detail the operation of the shape measuring apparatus according to the first embodiment configured as described above, together with the structure of the conical lens 104.

Light emitted from the light emitting device 101 is formed into parallel light beams by the collimator lens 102.

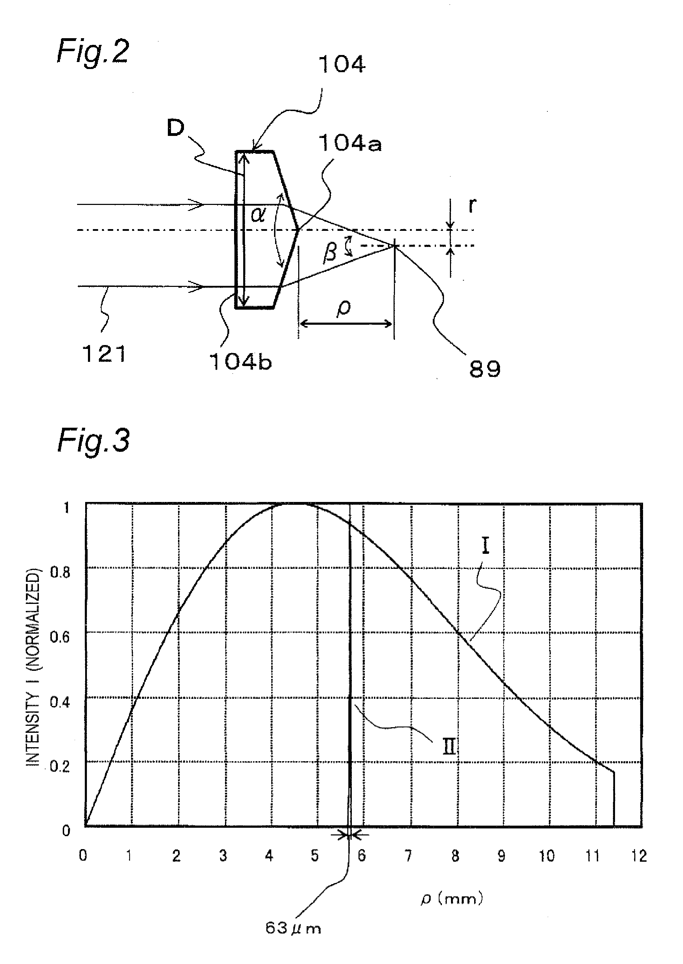

These parallel light beams 120 are divided into two parallel light beams 121A and 121B by the beam splitter 103. As shown in Fig. 2, the first parallel light beam 121A from the beam splitter 103 is incident to a flat bottom surface 104b of the conical lens 104 having a refractive index n and a conical shape with an apex angle $\alpha$ [°].

The first parallel light beam 121A incident to the conical lens 104, is refracted with an angle ($\beta$/2) [°] relative to the optical axis expressed by the following equation (2), as shown in Fig. 2.

[Equation 1]

$$\beta/2 = \sin^{-1}\{n\sin(\pi/2 - \alpha/2)\} - \pi/2 + \alpha/2 \quad .... \quad (2)$$

Supposing that an optical energy density of the first parallel light beam 121A outgoing from the collimator lens 102 to be incident to the conical lens 104 through the beam splitter 103 is i, that a distance from an apex 104a of the conical lens 104 to an arbitrary point (for example, the measuring object) 89 along the optical axis of the first parallel light beam 121A is $\rho$ [mm] (0 < $\rho$), and that a distance from the optical axis of the first parallel light beam 121A to the optical axis of the conical lens 104 is r [mm] (0 $\leq$ r $\leq$ (D/2)), an optical energy density I ($\rho$, r) at the arbitrary point 89 (for example, the measuring object) with the distance $\rho$ from the apex 104a to the point 89 and the distance r from the optical axis of the first parallel light beam 121A to the optical axis of the conical lens 104 is expressed by the following equation (3).

[Equation 2]

$$I(\rho,r) = 2i \times \frac{\tan^2(\alpha/2)\tan(\beta)}{\{\tan(\alpha/2) - \tan(\beta)\}^2} \times \frac{\rho}{r}$$

(3)

As expressed by the equation (3), the beam profile forms a curve of 1/r, and the optical energy density I has a maximum value on the optical axis. Supposing that an effective diameter of the conical lens 104 is D [mm], the point 89 with the distance $\rho$ having such a high optical energy density I is expressed by the following equation (4):

[Equation 3]

$\rho < D/\{2\tan(\beta)\}$ (4)

Moreover, supposing that a diameter of a light (beam) spot at the point 89 with the distance $\rho$ having a high optical energy density I is $\phi$ [$\mu$m], the following equation (5) is satisfied. In this case, $\lambda$ [nm] is a wavelength of light (beam) emitted from the light source.

[Equation 4]

$\phi = (2 \times 2.4048\lambda)/(2\pi\sin\beta)$ (5)

The conical lens 104 is designed into a shape satisfying the above-mentioned equations.

Light (beam) 122, transmitted through this conical lens 104, is applied to the surface of the measuring object 105. After the light (beam) 122 has been applied to the surface of the measuring object 105, reflected light from the surface of the measuring object 105 or the rearward scattered light 123 from the surface of the measuring object 105 is transmitted through the conical lens 104 to enter the beam splitter 103. In contrast, the second parallel light beam 121B, which is outgoing from the collimator lens 102 and incident to the reference-use reflective mirror 107 through the beam splitter 103 as well as through the condensing lens 106, is reflected by the reference-use reflective mirror 107. The reflected light 124 reflected by the reference-use reflective mirror 107 is allowed to enter the beam splitter 103 through the condensing lens 106. The reflected light beam or the rearward scattered light beam 123 from the surface of the measuring object 105 and the reflected light beam 124 from the reference mirror 107 are again combined with each other by the beam splitter 103 to be form interfered light, and the interfered light is incident to the detector 109 through the condensing lens 108 so that the detector 109 detects the interfered light.

As an example, the following description will explain a case where a material BK7 (a refractive index n = 1.515) is used as the conical lens 104, with an apex angle $\alpha$ = 120° and an effective diameter D = 10 mm being set in the conical lens 104, and an HeNe laser of $\lambda$= 633 nm is used as the light emitting device 101 serving as one example of a light source.

Fig. 3 is a graph (refer to an arrow I) in which the distance $\rho$ in the conical lens 104 and the intensity I of light (beam) are normalized with the maximum value of the intensity. The distance $\rho$ is plotted on the axis of abscissas and the intensity I of light (beam) is plotted on the axis of ordinates. In Fig. 3, for comparison, a graph (refer to an arrow II) is also shown in which the distance $\rho$ and the intensity I of light (beam) are normalized with the maximum value of the intensity in a conventional case where an HeNe laser of $\lambda$= 633 nm is used as a light emitting device serving as one example of a light source, with an objective lens having a Numerical Aperture NA = 0.1 being used in place of the conical lens 104.

As shown in Fig. 3, in the case with the conical lens 104, points of the distance $\rho$ having a high optical energy density I ranges by 11.4 mm (see the arrow I). When the diameter $\phi$ of the light (beam) spot within the points of the distance $\rho$ having a high optical energy density I is measured to be 1.5 $\mu$m. In contrast, in the conventional case where a lens having a Numerical Aperture NA = 0.1 is used as the objective lens as described above (see the arrow II), the depth of focus ranges only by 63 $\mu$m (see Fig. 3). Moreover, the light (beam) diameter is as large as 7.7 $\mu$m. Therefore, by using the conical lens 104, the depth of focus that is longer by about 180 times (11.4/0.063) and a fine light (beam) diameter of about 1/5 times (1.5/7.7) can be obtained in comparison to the conventional structure.

Therefore, by using a finer horizontal resolution within such a deep focus of depth, the intensity of the interfered light between the reflected light or the rearward scattered light from the measuring object 105 and the reflected light from the reference mirror 107 can be detected by the detector 109, and the shape can be measured by the shape measuring unit 80. Accordingly, in the shape measuring apparatus 83 according to the present embodiment, because of the deep focus of depth, a shape measuring operation in the thickness direction (a direction orthogonal to the X and Y directions, that is, a depth direction) of the measuring object 105 can be virtually carried out by only making movements in the X and Y directions along the surface of the measuring object 105, so that the shape measuring operation can be carried out without virtually moving the measuring object 105 in the depth direction. For this reason, it is only necessary to move in the depth direction on demand. In other words, in a case where the dimension of surface irregularities of the measuring object 105 is within the depth of focus, the scanning process in the thickness direction of the measuring object 105 becomes unnecessary, and the shape measuring operation can be simply carried out only by the movement (scanning) in the X and Y directions, thereby being possible to effectively prevent an occurrence of a measuring error. In contrast, in the conventional construction, since the depth of focus for shape measurement is short, it is impossible to carry out the entire shape measuring operation in the depth direction only by moving in the X and Y directions along the surface of the measuring object. Since it is necessary to move little by little also in the depth direction, the operation is complicated and a measuring error tends to occur.

The light emitting device 101, the movable stage 92, the reflective mirror moving device 91, the detector 109, and the shape measuring unit 80 are respectively connected to a control device 60 so that the operations of these devices are respectively controlled by the control device 60 so as to perform the shape measuring operation.

In the shape measuring operation, while the reference mirror 107 is secured and the measuring object 105 is being moved in the X-direction or the Y-direction, or in the X and Y directions by the movable stage 92, the interfered light of the reflected light or the scattered light may be detected by the detector 109. In contrast, the interfered light of the reflected light or the scattered light may be detected by the detector 109 while the measuring object 105 is secured and the reference mirror 107 is being moved by the reflective mirror moving device 91.

By carrying out the shape measuring operation on the measuring object 105 by using the above-mentioned light (irradiation beam), it is possible to realize the shape measuring apparatus 83 capable of carrying out the measuring operation with a long depth of focus and a high resolution.

(Second Embodiment)

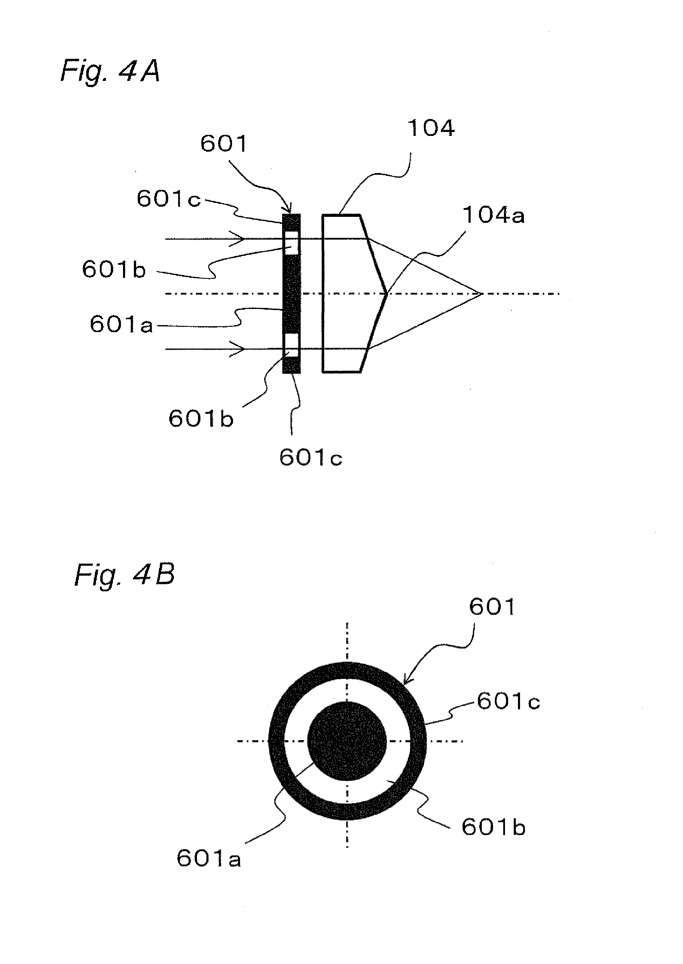

Figs. 4A and 4B show a structure of part of a shape measuring apparatus according to the second embodiment of the present invention.

In addition to the structure of the first embodiment, an optical filter 601 is disposed on the front portion (close to the light emitting device 101) of the conical lens 104 in the second embodiment. As the optical filter 601, for example, a member in which a light transmitting portion 601b (a white void portion in Figs. 4A and 4B) and a mask portion (shielding portion) 601a (black portions in Figs. 4A and 4B) placed on areas other than the transmitting portion 601b so as to shield light, are formed in concentric ring shapes may be used. By using this mask portion 601a, light (beam), which is disturbed around the top portion near the apex 104a of the conical lens 104 due to insufficient shape precision around the top portion because of a machining error of the conical lens 104 at the top portion , can be shielded and eliminated. In order to eliminate the machining error, the minimum range of the mask portion 601a is set to a range of 1 $\mu$m in diameter. The mask portion 601c on the outer circumference may be prepared on demand, and may not be provided.

A specific example in which the mask portion 601a is provided in such a manner includes a case where, in the conical lens 104 having an effective diameter D of 10 mm, a portion within a range of about 10 $\mu$m in diameter around the top portion fails to have an acute angle in its shape due to machining problems to cause a dull shape. For this reason, the mask portion 601a is formed to cover an area having a diameter of 2 mm or more around the top portion so that light is shielded by the mask portion 601a to eliminate an area having disturbed light (beam) due to the machining error.

The processes of the shape measuring operation in the second embodiment are the same as those of the first embodiment.

In the present embodiment, the reflected light or the rearward scattered light from the measuring object 105 passes through the optical filter 601 in an optical path in a reversed direction coaxially with the time of incidence, and is detected by the detector 109.

Upon measuring the shape of the surface to be measured of the measuring object 105, the interfered light of the reflected light or scattered light may be detected by the detector 109 while the measuring object 105 is being moved in the X-direction or Y-direction, or in the X and Y directions by using the movable stage 92, with the reference mirror 107 being secured. In contrast, the interfered light of the reflected light or the scattered light may be detected by the detector 109 while the reference mirror 107 is being moved by the reflective mirror moving device 91, with the measuring object 105 being secured.

(Third Embodiment)

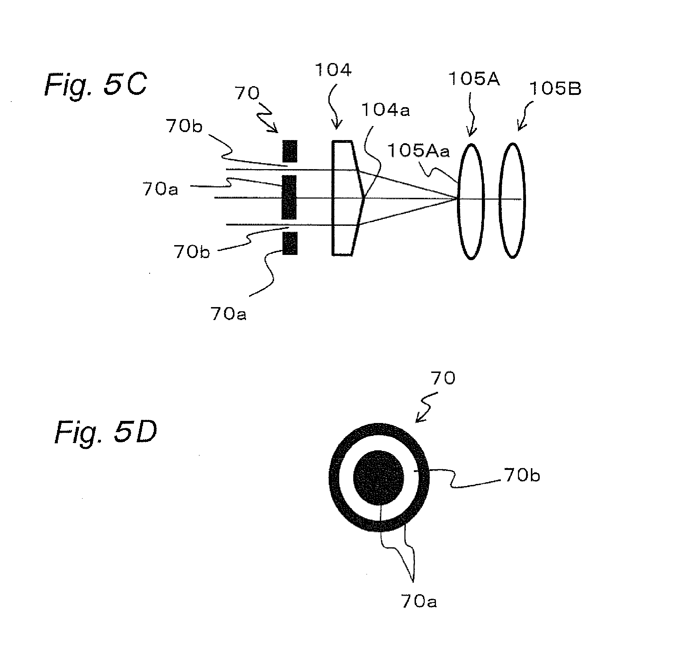

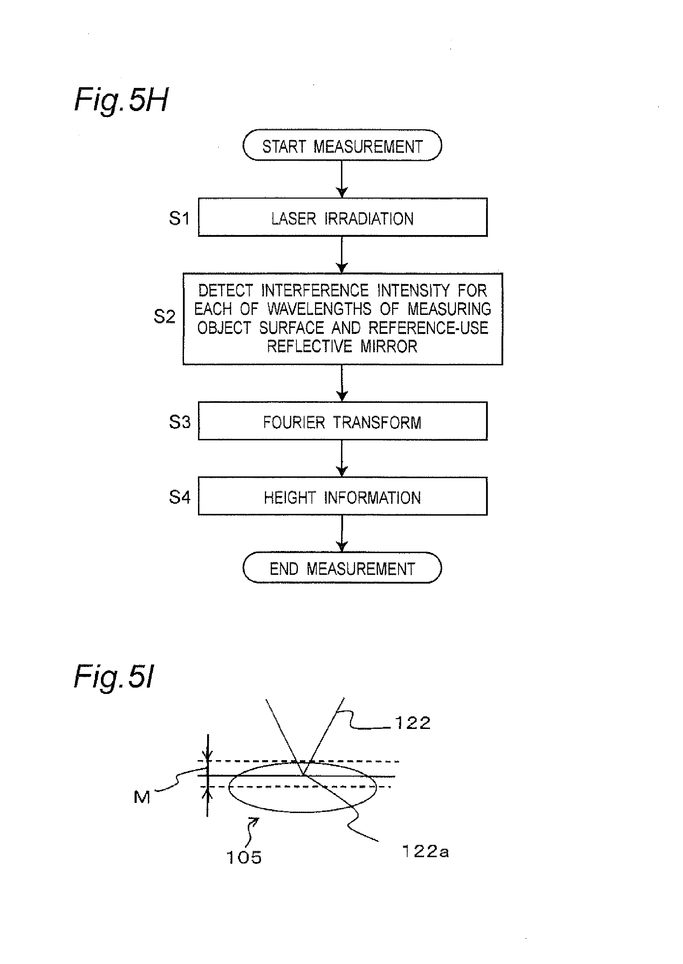

Fig. 5A shows a specific structural example of a shape measuring apparatus according to the first embodiment. Fig. 5B is an explanatory view showing a case where the shapes of front and rear surfaces of a plurality of lenses are inspected by using the shape measuring apparatus according to the first embodiment. For easier understanding, a forward optical path and a backward optical path of light proceeding in the center of the optical axis are indicated with a slight positional deviation from each other in Fig. 5A and Fig. 5B. Figs. 5C to 5G each show part of a structure of a shape measuring apparatus according to the third embodiment of the present invention. Fig. 5H is a flow chart that indicates processes of the shape measuring operation to be carried out by using the shape measuring apparatus according to the first embodiment.

Proposed as a specific example of the measuring object 105 serving as a target of measurement (a lens to be inspected) is, as shown in Fig. 5A, a measuring object (lens to be inspected) in which a plurality of lenses 105A and 105B to be inspected are provided coaxially, in a lens barrel or the like of a digital still camera (DSC). In Fig. 5A, for the purpose of simplification, only the lenses 105A and 105B to be inspected are illustrated, without the lens barrel itself being shown.

In a case where the shapes of the front and rear surfaces of the plurality of lenses 105A and 105B to be inspected (a front surface 105Aa and a rear surface 105Ab of the first lens 105A to be inspected and a front surface 105Ba and a rear surface 105Bb of the second lens 105B to be inspected), which serve as the measuring objects, are inspected as shown in Fig. 5B, desirably inspected are the front and rear surfaces of the lenses 105A and 105B to be inspected (the front surface 105Aa and the rear surface 105Ab of the first lens 105A to be inspected and the front surface 105Ba and the rear surface 105Bb of the second lens 105B to be inspected) in an assembled state as the lens barrel. However, in order to achieve this inspection, the light emitting device 101 and the conical lens 104 are required to be moved relatively to the lenses 105A and 105B to be inspected.

In this case, however, from the viewpoints of the measuring precision and the measuring speed (takt time), it is desirable not to move the light emitting device 101 and the conical lens 104 relatively to the lenses 105A and 105B to be inspected.

Therefore, in the shape measuring apparatus according to the third embodiment of the present invention, a plurality of doughnut shaped shutters 70, 71, 72, and 73 having different diameters are prepared, and by switching the plural shutters 70, 71, 72, and 73, as shown in Figs. 5C to 5G, adjustments are made to allow the respective front and rear surfaces of the measuring object 105 to be focused as shown in Fig. 5B.

More specifically, as shown in Figs. 5C and 5D, the first shutter 70 forms a concentric circle light transmitting portion 70b in an area corresponding to the neighborhood of the periphery of the top portion of the conical lens 104, with a mask portion 70a (shielding portion) being formed in the rest portions (the top portion and the outer circumferential portion of the transmitting portion 70b). With this structure, since light having transmitted through the transmitting portion 70b is focused on the front surface 105Aa of the first lens 105A to be inspected by the conical lens 104, is reflected by the front surface 105Aa, and is then directed to the beam splitter 103 after passing again through the transmitting portion 70b, so that the shape of the front surface 105Aa can be detected. In this example, the area of the transmitting portion 70b and the area of the mask portion 70a in the center are made to be equal to each other.

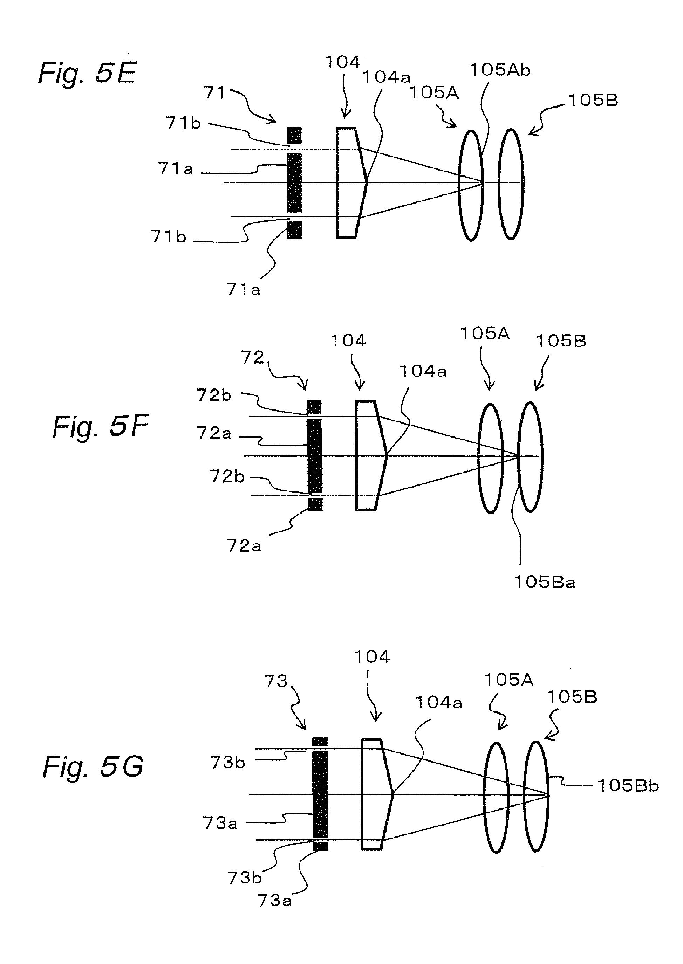

Moreover, as shown in Fig. 5E, the second shutter 71 forms a concentric circle light transmitting portion 71b on an outer circumference with respect to the position of the transmitting portion 70b, that is, in an area corresponding to an intermediate portion between the top portion of the conical lens 104 and the outer circumferential portion thereof, with a mask portion 71a being formed in the rest portions (the portion around the optical axis center of the transmitting portion 71b and the outer circumferential portion of the transmitting portion 71b). With this structure, since light having transmitted through the transmitting portion 71b is focused, after transmitting through the first lens 105A to be inspected, on the rear surface 105Ab of the first lens 105A to be inspected by the conical lens 104, is reflected by the rear surface 105Ab, and is then directed to the beam splitter 103 after passing again through the first lens 105A to be inspected and the transmitting portion 71b, so that the shape of the rear surface 105Ab can be detected.

Moreover, as shown in Fig. 5F, the third shutter 72 forms a concentric circle light transmitting portion 72b on an outer circumference with respect to the position of the transmitting portion 71b, with a mask portion 72a being formed in the rest portions (the portion around the optical axis center of the transmitting portion 72b and the outer circumferential portion of the transmitting portion 72b). With this structure, since light having transmitted through the transmitting portion 72b is focused, after transmitting through the first lens 105A to be inspected, on the front surface 105Ba of the second lens 105B to be inspected by the conical lens 104, is reflected by the front surface 105Ba, and is then directed to the beam splitter 103, after passing again through the first lens 105A to be inspected and the transmitting portion 72b, so that the shape of the front surface 105Ba can be detected.

Moreover, as shown in Fig. 5G, the fourth shutter 73 forms a concentric circle light transmitting portion 73b on an outer circumference with respect to the position of the transmitting portion 72b, with a mask portion 73a being formed in the rest portions (the portion around the optical axis center of the transmitting portion 73b and the outer circumferential portion of the transmitting portion 73b). With this structure, since light having transmitted through the transmitting portion 73b is focused, after transmitting through the first lens 105A to be inspected, on the rear surface 105Bb of the second lens 105B to be inspected by the conical lens 104, is reflected by the rear surface 105Bb, and is directed to the beam splitter 103 after passing again through the first lens 105A to be inspected and the transmitting portion 73b, so that the shape of the rear surface 105Bb can be detected.

In this manner, by adjusting the first to fourth shutters 70, 71, 72, and 73 by appropriately switching, the focal point can be adjusted onto each of the front and rear surfaces of the lenses 105A and 105B to be inspected, without moving the optical system such as the conical lens 104. In this manner, in a case where the shape measuring operation is carried out on a firstly arranged lens to be inspected, namely, the front surface 105Aa and the rear surface 105A of the first lens 105A to be inspected, by using a plurality of shutters, light beams of which depths of focus are adjusted on the lenses to be inspected thereafter arranged, that is, the front surface 105Ba and the rear surface 105Bb of the second lens 105B, can be removed so that it is possible to prevent interference to the second and following lenses to be inspected. Consequently, it is possible to carry out the shape measuring operation on the first lens to be inspected with high precision.

By placing the optical filter 601 described previously, the shielding portion in the area around the top portion of each of the first to fourth shutters 70, 71, 72, and 73 may not be provided so that the entire area around each of the top portions may be made as a transmitting portion.

A switching device 61 for these first to fourth shutters 70, 71, 72, and 73 may carry out the controlling operation in which, for example, the first to fourth shutters 70, 71, 72, and 73 are secured to a disc member, and the disc member is rotated by a predetermined angle with use of a rotation driving device such as a motor so as to position a desired shutter among the first to fourth shutters 70, 71, 72, and 73 on the optical axis into any one of states shown in Figs. 5C to 5G. These switching operations on the shutters can be controlled by the control device 60 that controls the operation of the entire shape measuring apparatus. The control device 60 controls the operations of the light emitting device 101, the movable stage 92, the reflective mirror moving device 91, the detector 109, the shape measuring unit 80, and the switching device 61, respectively.

Referring to Fig. 5H, the following description will discuss the shape measuring operation by this shape measuring apparatus 83. The shape measuring operation is carried out under operation control of the control device 60.

After starting the measuring operation, first in step S1, a laser beam is applied to the front surface of the measuring object 105 from the light emitting device 101 through the collimator lens 102, the beam splitter 103, and the conical lens 104.

Next in step S2, reflected light from the front surface of the measuring object 105 or rearward scattered light scattered at the rear area of the front surface is transmitted through the conical lens 104, and combined with reflected light from the reference mirror 107 by the beam splitter 103 to be formed into an interfered light beam, which is detected by the detector 109 through the condensing lens 108. More specifically, the detector 109 detects the interference intensity for each of wavelengths by the front surface of the measuring object 105 and the reference reflective mirror 107.

Next in step S3, the interference intensity detected by the spectroscope 80A of the shape measuring unit 80 through the detector 109 is converted to digital information by the A/D converter 80B, and is then received by the personal computer 80C so that the digital information is Fourier-transformed.

Next in step S4, by obtaining height information from the digital information through the Fourier-transformation of the digital information in step S3, the shape measuring operation of the front surface of the measuring object 105 is completed.

By carrying out steps S1 to S4 on the first to fourth shutters 70, 71, 72, and 73 respectively while the switching device 61 is being driven, the shapes of the front and rear surfaces of the lenses 105A and 105B (the front surface 105Aa and the rear surface 105Ab of the first lens 105A, as well as the front surface 105Ba and the rear surface 105Bb of the second lens 105B) can be inspected.

Moreover, normally, upon adjusting a focus onto the surface of each measuring object 105, regardless of whether the measuring object 105 (lenses to be inspected) as a target of measurement has a spherical surface or a non-spherical surface, it is necessary to move the optical system such as the conical lens 104 in a manner so as to allow the focus point to move along the shape of the surface of the measuring object 105.

However, in the present invention, by using the above-mentioned structure (in particular, by using the conical lens 104), it is possible to carry out an inspecting operation with a margin being in the depth direction of the optical axis (in other words, the inspecting operation is carried out by using the conical lens 104 to realize a long depth M of focus (see Fig. 5I)).

For this reason, in a case where data such as a design value of the shape of the surface of the measuring object 105 has been known, by adjusting a focus point 122a near the center in the surface of the measuring object 105 in the optical axis depth direction, as shown in Fig. 5I, the inspecting operation can be carried out without moving the conical lens 104 or the like upon inspection of the surface of the measuring object 105. This is because the inspecting operation carried out with no movements of the conical lens 104 and the like by detecting with use of the spectroscope 80A to carry out Fourier transform is optically equivalent to the inspecting operation carried out by moving the conical lens 104 and the reference lens 107.

According to the first to third embodiments, parallel light beams 120 emitted from the parallel light source 90 are divided into two parallel light beams 121A and 121B by the beam splitter 103, and the light beam 121A as one of the divided parallel light beams is converted by the conical lens 104 into the light (beam) 122 of which energy density I on the optical axis is maximized over the distance ρ that satisfies the aforementioned equations (4) and (2), and applied to the surface of the measuring object 105, while the parallel light beam 121B as the other one of the divided light beams is applied to the reference mirror 107, so that the interfered light between the reflected light or the rearward scattered light 123 from the light (beam) 122 applied to the surface of the measuring object 105 and the reflected light 124 from the reference mirror 107 is detected by the detector 109, and based on the interfered light detected by the detector 109, the shape of the surface of the measuring object 105 is measured by the shape measuring unit 80. Due to this structure, it is possible to carry out the shape measuring operation with a longer depth of focus (for example, a depth of focus longer by one digit or two digits than that of the conventional art) and with a higher resolution (for example, a resolution of sub-micron or less) in comparison with the conventional art.

More specifically, in a conventional shape measuring apparatus based on the Michelson interference using one or a plurality of lenses having a spherical surface or a non-spherical surface in an objective lens, the measurement depth and the measurement resolution are determined by the numerical aperture NA of the objective lens, with the result that the long measurement depth and the high measurement resolution have a mutually conflicting relationship, thereby failing to satisfy both of the features. However, according to the first to third embodiments, by using the conical lens 104 configured to satisfy the aforementioned equations (4) and (2), it is possible to carry out a shape measuring operation with a longer depth of focus (for example, a depth of focus longer by one digit or two digits than that of the conventional art) and a higher resolution (for example, a resolution of sub-micron or less) in comparison with the conventional art.

By properly combining the arbitrary embodiments of the aforementioned various embodiments, the effects possessed by the embodiments can be produced.

INDUSTRIAL APPLICABILITY

The present invention is useful in providing a shape measuring apparatus and a method thereof, which measure a shape of a front surface or a rear surface of a measuring object (target of measurement), such as an industrial product (for example, a lens), with a long depth of focus and a high resolution.

Although the present invention has been fully described in connection with the preferred embodiments thereof with reference to the accompanying drawings, it is to be noted that various changes and modifications are apparent to those skilled in the art. Such changes and modifications are to be understood as included within the scope of the present invention as defined by the appended claims unless they depart therefrom.

**Claims**

**1.** A shape measuring apparatus comprising:

a light source that emits parallel light beams;
a beam splitter that divides the parallel light beams emitted from the light source into two light beams;
a conical lens that allows one of the two light beams divided by the beam splitter to pass therethrough, converts the transmitted light beam in to a light beam having an energy density on an optical axis maximized over a distance ρ satisfying an equation below so as to allow the converted light beam to be applied to a surface of a measuring object, and allows reflected light from the surface of the measuring object or rearward scattered light therefrom to pass therethrough;
a reference mirror that reflects another one of the two light beams divided by the beam splitter;
a detector that detects an interfered light beam between the reflected light applied to the surface of the measuring object and having transmitted through the conical lens or the rearward scattered light therefrom and the reflected light from the reference mirror; and
a shape measuring unit that measures a shape of the surface of the measuring object based on the interfered light detected by the detector:

$$\rho < D/\{2\tan(\beta)\},$$

where $\beta/2 = \sin^{-1}\{n\sin(\pi/2 - \alpha/2)\} - \pi/2 + \alpha/2$ is satisfied, in which

D: an effective diameter of the conical lens,

α: an apex angle of a cone shape of the conical lens,

ρ: a distance from the apex of the conical lens to the measuring object along the optical axis of the light, and

n: a refractive index of the conical lens.

2. The shape measuring apparatus according to claim 1, further comprising:

an optical filter that is placed between the beam splitter and the conical lens so as to shield an area corresponding to a top portion of the conical lens.

3. The shape measuring apparatus according to claim 1 further comprising:

a plurality of shutters, each placed between the beam splitter and the conical lens and provided with a shielding portion and a doughnut-shaped transmitting portion disposed on an outer circumference of the shielding portion, wherein

the shielding portion of each of the shutters shields an area corresponding to a top portion of the conical lens, the shielding portions of the shutters are disposed on positions different from one another, and the shape measuring unit selectively applies the light from the conical lens to each of surfaces of a plurality of measuring objects, to carry out the shape measuring operation by selectively using the plurality of shutters.

4. The shape measuring apparatus according to any one of claims 1 to 3 further comprising:

a measuring object moving device that moves the measuring object in a direction orthogonal to the optical axis direction of the light incident to the measuring object from the conical lens so as to measure the shape of the surface of the measuring object.

5. A shape measuring method comprising:

dividing parallel light beams emitted from a light source into two light beams;
allowing a conical lens to convert one of the two divided light beams in to a light beam having an energy density on an optical axis maximized over a distance ρ satisfying an equation below so as to allow the converted light beam to be applied to a surface of a measuring object;
allowing another one of the two divided light beams to be reflected by a reference mirror;
detecting an interfered light beam between reflected light reflected by the surface of the measuring object and transmitted through the conical lens or rearward scattered light therefrom and reflected light from the reference mirror; and
based on the interfered light being detected, measuring a shape of the surface of the measuring object:

$$\rho < D/\{2\tan(\beta)\},$$

where β/2 = sin⁻¹{nsin(π/2 - α/2)} - π/2 + α/2 is satisfied, in which

D: an effective diameter of the conical lens,

α: an apex angle of a cone shape of the conical lens,

ρ: a distance from the apex of the conical lens to the measuring object along the optical axis of the light, and

n: a refractive index of the conical lens.

6. The shape measuring method according to claim 5, further comprising:

when the one of the two light beams divided by the beam splitter passes through the conical lens, measuring a shape of a first surface of the measuring object based on a first reflected light from the first surface of the measuring object derived from the one of the light beams that has been transmitted through a doughnut-shaped transmitting portion disposed on an outer circumference of an area corresponding to a top portion of the conical lens of a shutter placed between the beam splitter and the conical lens, and then
when the one of the two light beams divided by the beam splitter passes through the conical lens, measuring a shape of a second surface different from the first surface of the measuring object, based on a second reflected light reflected by the second surface of the measuring object, the second reflected light derived from the one of the light beams having been transmitted through a doughnut-shaped transmitting portion of another shutter, which has a transmitting portion at a position different from that of the shutter, placed between the beam splitter and the conical lens, the transmitting portion being placed on an outer circumference of an area corresponding to the top portion of the conical lens.

7. The shape measuring method according to claim 5 or 6, wherein, the shape of the surface of the measuring object is measured by moving the measuring object with use of a measuring object moving device in a direction orthogonal to the optical axis of the light incident to the measuring object from the conical lens.

*Fig. 1*

*Fig.2*

*Fig.3*

## Fig. 4A

## Fig. 4B

*Fig.5A*

*Fig.5B*

*Fig. 5C*

70
70b
104
104a
70a
105A
105B
105Aa
70b
70a

*Fig. 5D*

70
70b
70a

*Fig. 5E*

*Fig. 5F*

*Fig. 5G*

## Fig.5H

```
┌─────────────────────────┐
│    START MEASUREMENT    │
└─────────────────────────┘
              │
              ▼
S1  ┌─────────────────────────────────┐
    │        LASER IRRADIATION        │
    └─────────────────────────────────┘
              │
              ▼
S2  ┌─────────────────────────────────┐
    │ DETECT INTERFERENCE INTENSITY FOR│
    │ EACH OF WAVELENGTHS OF MEASURING │
    │ OBJECT SURFACE AND REFERENCE-USE │
    │     REFLECTIVE MIRROR            │
    └─────────────────────────────────┘
              │
              ▼
S3  ┌─────────────────────────────────┐
    │        FOURIER TRANSFORM         │
    └─────────────────────────────────┘
              │
              ▼
S4  ┌─────────────────────────────────┐
    │        HEIGHT INFORMATION        │
    └─────────────────────────────────┘
              │
              ▼
    ┌─────────────────────────┐
    │     END MEASUREMENT     │
    └─────────────────────────┘
```

## Fig.5I

*Fig. 6*

*Fig. 7*

$$1.22 \times \frac{\lambda}{NA}$$

$$\frac{\lambda}{NA^2}$$

## INTERNATIONAL SEARCH REPORT

| International application No. |
| --- |
| PCT/JP2010/001643 |

A.  CLASSIFICATION OF SUBJECT MATTER
*G01B11/24*(2006.01)i, *G01B9/02*(2006.01)i

According to International Patent Classification (IPC) or to both national classification and IPC

B.  FIELDS SEARCHED

Minimum documentation searched (classification system followed by classification symbols)
G01B9/00-11/30

Documentation searched other than minimum documentation to the extent that such documents are included in the fields searched
| | | | |
| --- | --- | --- | --- |
| Jitsuyo Shinan Koho | 1922-1996 | Jitsuyo Shinan Toroku Koho | 1996-2010 |
| Kokai Jitsuyo Shinan Koho | 1971-2010 | Toroku Jitsuyo Shinan Koho | 1994-2010 |

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
| --- | --- | --- |
| Y<br>A | JP 3633713 B2  (Matsushita Electric Industrial Co., Ltd.),<br>30 March 2005 (30.03.2005),<br>claims; paragraphs [0001] to [0035]; fig. 2<br>& US 5781269 A | 1,2,4,5,7<br>3,6 |
| Y<br>A | JP 6-341809 A  (Mitsutoyo Corp.),<br>13 December 1994 (13.12.1994),<br>entire text; all drawings<br>(Family: none) | 1,2,4,5,7<br>3,6 |
| A | JP 8-136248 A  (Idec Izumi Corp.),<br>31 May 1996 (31.05.1996),<br>paragraph [0010]; fig. 2<br>(Family: none) | 1-7 |

☒    Further documents are listed in the continuation of Box C.  ☐    See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 07 May, 2010 (07.05.10) | 18 May, 2010 (18.05.10) |

| Name and mailing address of the ISA/<br>Japanese Patent Office | Authorized officer |
| --- | --- |
| Facsimile No. | Telephone No. |

Form PCT/ISA/210 (second sheet) (July 2009)

**INTERNATIONAL SEARCH REPORT**

| International application No. |
| --- |
| PCT/JP2010/001643 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | JP 7-63508 A  (Ishikawajima-Harima Heavy Industries Co., Ltd.), 10 March 1995 (10.03.1995), paragraphs [0009], [0015] (Family: none) | 1-7 |

Form PCT/ISA/210 (continuation of second sheet) (July 2009)

**EP 2 410 289 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 6341809 A